# EUROPÄISCHE PATENTANMELDUNG

(11) **EP 0 823 808 A2**
(43) Veröffentlichungstag der Anmeldung: **11.02.1998**
(21) Anmeldenummer: 97113048.9
(22) Anmeldetag: 29.07.1997
(51) Int. Cl.: H04M 1/65

(54) **Anrufbeantworter**

(30) Priorität: 09.08.1996 DE 19632259
(71) Anmelder: SIEMENS AKTIENGESELLSCHAFT, 80333 München (DE)
(72) Erfinder: Schneider-Hufschmidt, Matthias, Dr. rer. nat., 80997 München (DE)

(57) **Zusammenfassung**

Die Erfindung betrifft einen Anrufbeantworter (AB) mit einem Sprachspeicher (SP) zur Aufnahme von eingehenden Nachrichten (N1 bis Nn) und mit Mitteln zu deren Abfrage. Erfindungsgemäß ist der Anrufbeantworter (AB) bei der Abfrage nach jeder der Nachrichten (N1 bis Nn) automatisch in einen Pausenzustand schaltbar.

## Beschreibung

Die Erfindung betrifft einen Anrufbeantworter gemäß dem Oberbegriff des Patentanspruchs 1.

Bei einem Anrufbeantworter werden eingehende, verbale Nachrichten gespeichert. Die Speicherung der Sprachdaten erfolgt bei digitalen Anrufbeantwortern vorzugsweise in nichtflüchtigen Speichern, beispielsweise in sogenannten Flash-RAMs. Bei der Abfrage der gespeicherten Nachrichten werden diese in der Reihenfolge ihres Einganges wiedergegeben. Wenn der Anrufbeantworter in den Wiedergabezustand geschaltet ist, werden die Nachrichten ohne eine Unterbrechung oder eine Pause abgespielt. Der Benutzer kann von Hand die Wiedergabe unterbrechen und wieder fortsetzen. Hierbei kann er auf eine vorhergehende oder eine nachfolgende Nachricht zurück- bzw. vorspringen.

Durch den pausenlosen Übergang zwischen aufeinanderfolgenden Nachrichten wird dem Benutzer die Ausführung nachrichtenspezifischer Aktionen erschwert. Solche nachrichtenspezifische Aktionen sind beispielsweise das selektive Löschen von Nachrichten, das Markieren der soeben abgehörten Nachricht und das Notieren von soeben gehörten Telefonnummern und Notizen. Der Benutzer ist gezwungen, am Ende einer Nachricht explizit zur Unterbrechung eine Pausentaste zu drücken, oder seine Aktionen während des Abspielvorganges zu starten.

Vor allem bei destruktiven Operationen, wie dem selektiven Löschen von Nachrichten, muß der Benutzer überprüfen, ob die Nummer der aktuell bearbeiteten Nachricht sich zwischen dem Einleiten der Aktion und der Ausführung durch den Anrufbeantworter verändert hat. Es ist für den Benutzer sehr störend, daß er nicht sicher sein kann, wirklich die soeben gehörte Nachricht zu löschen. Statt der soeben abgehörten Nachricht kann versehentlich eine noch nicht abgehörte Nachricht gelöscht werden, oder die Nachricht wird nur teilweise gelöscht.

Der Erfindung liegt die Aufgabe zugrunde, den Komfort bei der Abfrage eines Anrufbeantworters zu verbessern.

Diese Aufgabe wird erfindungsgemäß durch die im Patentanspruch 1 angegebenen Merkmale gelöst.

Der erfindungsgemäße Anrufbeantworter erleichtert dem Benutzer insbesondere die Ausführung von nachrichtenspezifischen Aktionen.

Im folgenden wird die Erfindung anhand eines in der Zeichnung dargestellten Ausführungsbeispieles beschrieben. Dabei zeigen:
Figur 1 ein Blockschaltbild eines Anrufbeantworters,
Figur 2 verschiedene Zustände eines Sprachspeichers, und
Figur 3 ein Ablaufdiagramm.

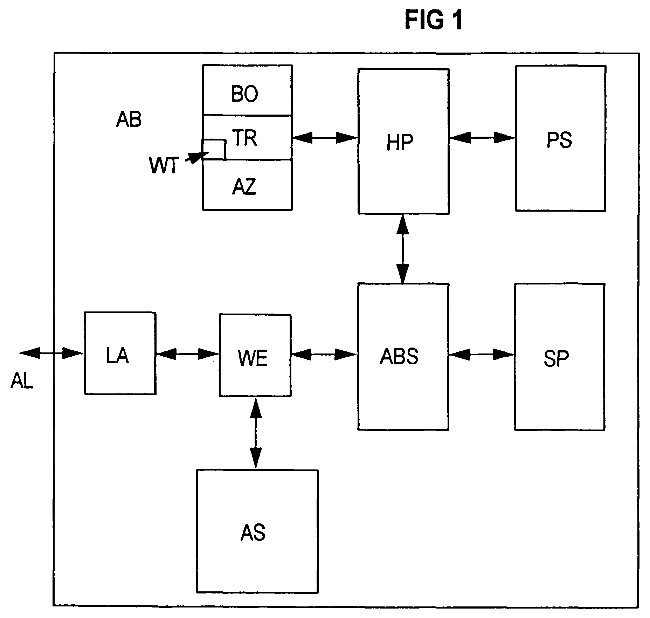

In Figur 1 ist ein digitaler Anrufbeantworter AB mit einem Hauptprozessor HP dargestellt. Der Hauptprozessor HP ist mit einem Programmspeicher PS und einer Bedienoberfläche BO verbunden. Der Programmspeicher PS ist vorzugsweise durch einen ROM-Speicherbaustein realisiert. Die Bedienoberfläche BO weist einen Tastaturblock TR und eine Anzeigeeinrichtung AZ auf. Der Tastaturblock TR enthält eine Wiedergabetaste WT.

Der Hauptprozessor HP ist weiter mit einem Anrufbeantworterschaltkreis ABS verbunden, an dem ein Sprachspeicher SP angeschaltet ist. Der Anrufbeantworterschaltkreis ABS ist über eine Wandlereinrichtung WE zur digital-analog und analog-digital Wandlung mit einer Leitungsanschaltung LA verbunden. Über eine Anschlußleitung AL ist die Leitungsanschaltung LA mit einem nicht näher dargestellten Kommunikationsnetz verbunden. Die Wandlereinrichtung WE ist mit einer akustischen Schnittstelle AS verbunden, die die Sprachein- und -ausgabe mit einem Anwender ermöglicht, und hierzu beispielsweise ein Mikrophon und einen Lautsprecher aufweist.

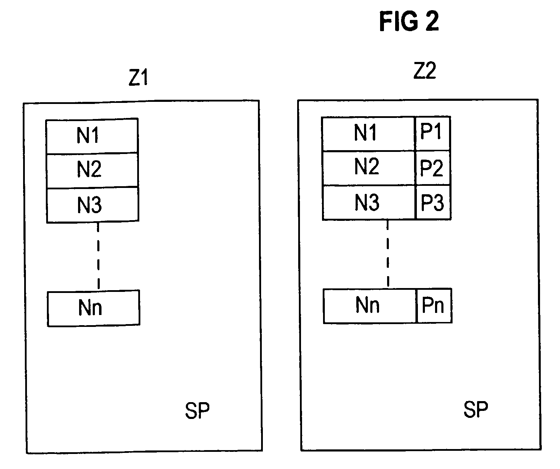

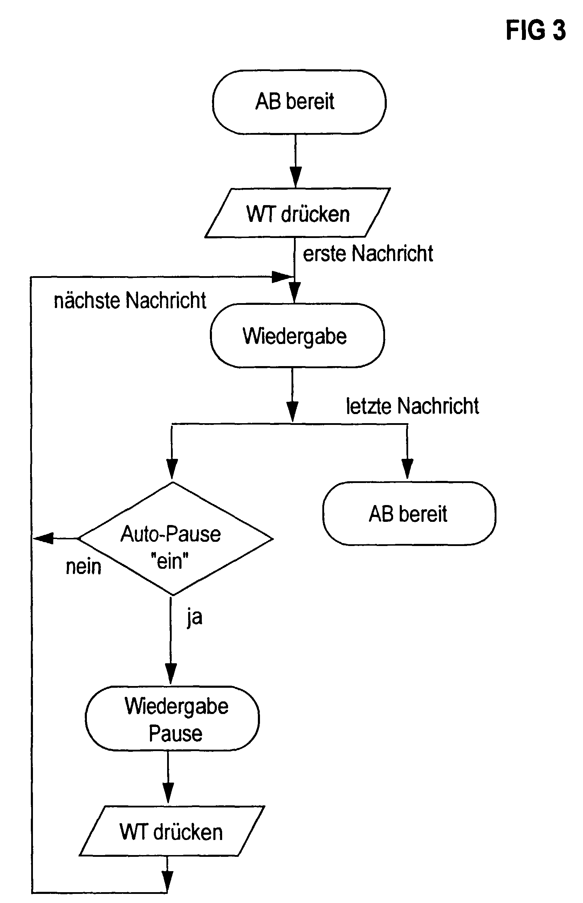

In der Figur 2 sind zwei Zustände Z1 und Z2 des Sprachspeichers SP dargestellt. Im Zustand Z1 ist im Sprachspeicher SP eine Nachrichtenschlange bestehend aus den Nachrichten N1, N2 bis Nn abgespeichert. Bei der folgenden Beschreibung wird auch auf das Ablaufdiagramm in Figur 3 Bezug genommen.

Wenn der Anrufbeantworter AB zur Wiedergabe bereit ist, kann durch Drücken der Wiedergabetaste WT diese Nachrichtenschlange aus den Nachrichten N1 bis Nn abgespielt werden. Hierbei werden sämtliche Nachrichten N1 bis Nn, angefangen von der ersten Nachricht N1 bis zur letzten Nachricht Nn ohne Unterbrechung oder Pause wiedergegeben.

Erfindungsgemäß wird hinter jede Nachricht N1 bis Nn eine automatisch erzeugte Pause in die Nachrichtenschlange eingefügt. Hierzu wird beispielsweise jede Nachricht N1 bis Nn mit einem Pausenblock P1 bis Pn ergänzt. Dieses Einfügen der Pausenblöcke P1 bis Pn kann vom Benutzer fest eingeschaltet oder ausgeschaltet werden. Dies geschieht beispielsweise durch Setzen einer entsprechenden Markierung-Flag- in den Grundeinstellungen des Anrufbeantworters AB. Die Grundeinstellungen werden beispielsweise menügeführt vom Benutzer eingegeben. Das Einstellen der Funktion Auto-Pause 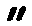 ein 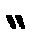 oder 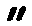 aus 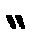 kann auch über eine zusätzliche Taste des Tastaturblockes TR vom Benutzer erfolgen.

Im ausgeschalteten Zustand, d.h. im Zustand Auto-Pause 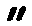 aus 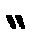 , verhält sich der Anrufbeantworter AB wie ein herkömmlicher Anrufbeantworter, bei dem die Nachrichten N1 bis Nn ohne Pause hintereinander abgespielt werden.

Im eingeschalteten Zustand, d.h. im Zustand Auto-Pause 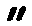 ein 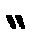 hält der Anrufbeantworter AB mit der Wiedergabe nach jeder Nachricht N1 bis Nn an. Die Pause ist integraler Teil jeder der Nachrichten N1 bis Nn. Dieser Pausen-Zustand kann beispielsweise durch Drücken der Wiedergabetaste WT, oder durch einen Sprung auf eine zurückliegende oder eine davorliegende Nachricht in der Nachrichtenschlange verlassen werden, wobei mit der Wiedergabe der angesprungenen Nachricht fortgefahren wird.

### Bezugszeichenliste

- AB: Anrufbeantworter
- BO: Bedienoberfläche
- TR: Tastaturblock
- WT: Wiedergabetaste
- AZ: Anzeigeeinrichtung
- HP: Hauptprozessor
- PS: Programmspeicher
- LA: Leitungsanschaltung
- WE: Wandlereinrichtung
- ABS: Anrufbeantworterschaltkreis
- SP: Sprachspeicher
- N1..n: Nachrichten
- P1..n: Pausenblock
- AS: akustische Schnittstelle
- Z1, 2: Zustände des Sprachspeichers
- AL: Anschlußleitung

## Patentansprüche

1. Anrufbeantworter (AB) mit einem Sprachspeicher (SP) zur Aufnahme von eingehenden Nachrichten (N1 bis Nn) und mit Mitteln zu deren Abfrage
**dadurch gekennzeichnet,** daß
der Anrufbeantworter (AB) bei der Abfrage nach jeder der Nachrichten (N1 bis Nn) automatisch in einen Pausenzustand schaltbar ist.

2. Anrufbeantworter (AB) nach Anspruch 1
**dadurch gekennzeichnet,** daß
jede Nachricht (N1 bis Nn) im Sprachspeicher (SP) mit einem Pausenblock (P1 bis Pn) ergänzt wird, durch den der Anrufbeantworter (AB) in den Pausenzustand schaltbar ist.
